# EUROPEAN PATENT APPLICATION

(11) **EP 4 826 818 A1**
(43) Date of publication of application: **21.10.2026**
(21) Application number: 25867481.1
(22) Date of filing: 07.05.2025
(51) Int. Cl.: H01M 10/0525, H01M 4/133, H01M 4/1393, H01M 4/36

(54) **SECONDARY BATTERY AND ELECTRIC APPARATUS**

(30) Priority: 18.09.2024 CN 202411301523
(71) Applicant: Contemporary Amperex Technology Co., Limited, Ningde, Fujian 352100 (CN)
(72) Inventor: ZENG, Qinqin, Ningde, Fujian 352100 (CN); LI, Yuanyuan, Ningde, Fujian 352100 (CN); LIN, Xieji, Ningde, Fujian 352100 (CN); SHEN, Rui, Ningde, Fujian 352100 (CN); HE, Libing, Ningde, Fujian 352100 (CN); LIU, Na, Ningde, Fujian 352100 (CN)
(74) Representative: Lorenz Seidler Gossel Part. mbB
(86) International application number: PCT/CN2025/093149
(87) International publication number: WO 2026/060957

(57) **Abstract**

A secondary battery and an electric apparatus are provided. The secondary battery includes a negative electrode plate. The negative electrode plate includes a negative electrode current collector and a negative electrode film layer located on at least one surface of the negative electrode current collector, and the negative electrode film layer has a first surface facing away from the negative electrode current collector and a second surface disposed opposite the first surface. Thickness of the negative electrode film layer is denoted as H, a region from the first surface of the negative electrode film layer to a thickness of 0.3H is denoted as a first region of the negative electrode film layer, and a region from the second surface of the negative electrode film layer to a thickness of 0.3H is denoted as a second region of the negative electrode film layer. The first region includes a first negative electrode active material, and the second region includes a second negative electrode active material. The first negative electrode active material includes a matrix and a carbon coating layer formed on at least part of a surface of the matrix, and a lithiation plateau voltage of the first negative electrode active material is 0.118 V to 0.140 V. Gram capacity of the second negative electrode active material is greater than that of the first negative electrode active material.

## Description

### CROSS-REFERENCE TO RELATED APPLICATIONS

This disclosure claims priority to Chinese Patent Application No. 202411301523.X, filed on September 18, 2024 and entitled "SECONDARY BATTERY AND ELECTRIC APPARATUS", which is incorporated herein by reference in its entirety.

### TECHNICAL FIELD

This disclosure relates to the field of battery technologies, and in particular, to a secondary battery and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, and aerospace. Due to great development of secondary batteries, higher requirements are imposed on kinetic performance and energy density of secondary batteries.

### SUMMARY

This disclosure is made in view of the foregoing issues and is intended to provide a secondary battery and an electric apparatus. The secondary battery has high energy density while maintaining good kinetic performance.

To achieve the foregoing objective, this disclosure provides a secondary battery, including a negative electrode plate, where the negative electrode plate includes a negative electrode current collector and a negative electrode film layer located on at least one surface of the negative electrode current collector, and the negative electrode film layer has a first surface facing away from the negative electrode current collector and a second surface disposed opposite the first surface, where thickness of the negative electrode film layer is denoted as H, a region from the first surface of the negative electrode film layer to a thickness of 0.3H is denoted as a first region of the negative electrode film layer, and a region from the second surface of the negative electrode film layer to a thickness of 0.3H is denoted as a second region of the negative electrode film layer, the first region including a first negative electrode active material, and the second region including a second negative electrode active material. The first negative electrode active material includes a matrix and a carbon coating layer formed on at least part of a surface of the matrix; and a lithiation plateau voltage of the first negative electrode active material is 0.118 V to 0.140 V, where a charge-discharge test is performed on a button cell prepared from a test material at a delithiation rate of 0.1C and a lithiation rate of 0.05C separately to obtain a charge-discharge curve within a range of 0.005 V to 2.0 V, and a ratio of a total lithiation energy to a total lithiation capacity within the range of 0.005 V to 2.0 V is defined as a lithiation plateau voltage of the test material. Gram capacity of the second negative electrode active material is greater than that of the first negative electrode active material. Thus, the secondary battery has good kinetic performance and high energy density.

In some embodiments, the lithiation plateau voltage of the first negative electrode active material is 0.123 V to 0.135 V. This is conducive to further improving the kinetic performance of the secondary battery.

In some embodiments, the carbon coating layer includes soft carbon. This helps to provide more active ion channels, thereby improving the kinetic performance of the secondary battery.

In some embodiments, the first negative electrode active material includes a primary particle graphite material and a secondary particle graphite material. Using a mixture of the primary particle graphite material and the secondary particle graphite material can further improve the kinetic performance of the secondary battery.

In some embodiments, in the first negative electrode active material, a number percentage of the secondary particle graphite material is greater than or equal to 60%. Using secondary particles as the majority of the first negative electrode active material achieves high isotropy, so that the swelling of the secondary battery during cycling can be distributed in all directions, reducing the swelling of the electrode plate, thereby improving the cycling performance.

In some embodiments, a powder OI value of the first negative electrode active material is 2.0 to 6.0. Thus, lithium ions can be intercalated from all directions, improving the fast charging performance of the secondary battery.

In some embodiments, the gram capacity of the second negative electrode active material is 359 mAh/g or more. This is conducive to increasing the energy density of the secondary battery.

In some embodiments, the gram capacity of the second negative electrode active material is 360 mAh/g to 366 mAh/g. This is conducive to increasing the energy density of the secondary battery.

In some embodiments, powder compacted density of the first negative electrode active material under a pressure of 50000 N is 1.74 g/cc to 1.79 g/cc. This helps to provide an appropriate porosity in the first region, thereby facilitating the infiltration of an electrolyte. In some embodiments, powder compacted density of the second negative electrode active material under a pressure of 50000 N is 1.95 g/cc to 2.04 g/cc. This helps to provide an appropriate porosity in the second region and increase the energy density of the secondary battery. In some embodiments, particle size by volume D_{V}50 of the first negative electrode active material is 7.8 µm to 15.8 µm. Maintaining the particle size by volume D_{V}50 of the first negative electrode active material within the foregoing range helps to form a good pore distribution state in the first region of the electrode plate, and thus is more conducive to improving the transmission performance of ions and electrons, improving the fast charging performance of the battery.

In some embodiments, particle size distribution (D_{V}90-D_{V}10)/D_{V}50 of the first negative electrode active material is 0.90 to 1.50. The particle size distribution falling within this range indicates a good distribution of the negative electrode active material particles, so that the upper region of the negative electrode film layer can have an appropriate pore structure, which can reduce the ion liquid-phase transmission difficulty, further improving the kinetic performance of the secondary battery.

In some embodiments, BET specific surface area of the first negative electrode active material is 0.6 m²/g to 1.3 m²/g. This is conducive to reducing the side reaction activity on the surface of the first negative electrode active material, improving the cycling performance of the secondary battery.

In some embodiments, the gram capacity of the first negative electrode active material is 350.5 mAh/g to 358.5 mAh/g. This is conducive to increasing the energy density of the secondary battery.

In some embodiments, La(110) of the second negative electrode active material is 130 nm to 175 nm, and Lc(002) is 30 nm to 42 nm, where La(110) represents a crystallite size along an a-axis in a (110) crystal plane of the material, and Lc(002) represents a crystallite size along a c-axis in a (002) crystal plane of the material. Thus, the secondary battery can have high energy density.

In some embodiments, La(110)/Lc(002) is 3.5 to 5.5. Thus, the secondary battery can have high energy density.

In some embodiments, a charge-discharge test is performed on a button cell prepared from the second negative electrode active material at a delithiation rate of 0.1C and a lithiation rate of 0.05C separately to obtain a charge-discharge curve within a range of 0.005 V to 2.0 V, where in the discharge curve of the second negative electrode active material, a lithiation plateau exists in a voltage range of 0.005 V to 0.070 V, and a proportion X1 of a discharge capacity corresponding to the lithiation plateau to a total discharge capacity of the button cell is 43% or more. This is conducive to increasing the energy density of the secondary battery.

In some embodiments, the proportion X1 of the discharge capacity corresponding to the lithiation plateau to the total discharge capacity of the button cell is 43% to 47%.

In some embodiments, particle size distribution (D_{V}90-D_{V}10)/D_{V}50 of the second negative electrode active material is 0.9 to 1.25. This is conducive to improving the transmission performance of active ions and electrons in the negative electrode film layer, thereby improving the kinetic performance of the secondary battery.

In some embodiments, BET specific surface area of the second negative electrode active material is 0.8 m²/g to 2.1 m²/g. This is conducive to reducing the side reaction activity on the surface of the negative electrode active material, thereby improving the cycling performance and initial coulombic efficiency of the secondary battery.

In some embodiments, a mass ratio of the first negative electrode active material to the second negative electrode active material is 4:6 to 6:4. This can maintain the energy density while improving the kinetic performance of the secondary battery.

In some embodiments, compacted density of the negative electrode film layer is 1.50 g/cc to 1.90 g/cc. Thus, the negative electrode film layer can have high capacity and good active ion and electron transmission performance, so that the secondary battery can have high energy density and good kinetic performance.

In some embodiments, surface density of the negative electrode film layer is 6.0 mg/cm² to 24.0 mg/cm². Thus, the negative electrode film layer can have high capacity and good active ion and electron transmission performance, so that the secondary battery can have high energy density and good kinetic performance.

In some embodiments, the thickness of the negative electrode film layer is 60 µm to 240 µm. Thus, the secondary battery can maintain the energy density while having good kinetic performance.

In some embodiments, porosity of the first region is greater than that of the second region. The negative electrode film layer is set as a double layer, where the upper region (first region) has a greater porosity than the lower region (second region), so the contact opportunities between the first region and active ions in the electrolyte are increased, which enables faster migration of the active ions during charging and discharging, improving the lithiation kinetics of the material, thereby improving the kinetic performance of the battery.

In some embodiments, a preparation method of the first negative electrode active material includes:
providing a matrix material; and
mixing the matrix material and an organic carbon source, followed by heat treatment, to obtain the first negative electrode active material;
where a mass ratio of the matrix material to the organic carbon source is 100:1.5 to 100:8.

Thus, with the matrix material and the organic carbon source being set to fall within the foregoing mass ratio range, the obtained first negative electrode active material can have a lithiation plateau voltage of 0.118 V to 0.140 V.

A second aspect of this disclosure provides an electric apparatus, including the secondary battery according to the first aspect of this disclosure. The electric apparatus of this disclosure includes the secondary battery provided in this disclosure, and therefore has at least the same advantages as the secondary battery.

### BRIEF DESCRIPTION OF DRAWINGS

FIG. 1 is a schematic diagram of a negative electrode plate according to an embodiment of this disclosure.
FIG. 2 is a schematic diagram of a battery cell according to an embodiment of this disclosure.
FIG. 3 is an exploded view of a battery cell according to an embodiment of this disclosure shown in FIG. 1.
FIG. 4 is a schematic diagram of a battery module according to an embodiment of this disclosure.
FIG. 5 is a schematic diagram of a battery pack according to an embodiment of this disclosure.
FIG. 6 an exploded view of the battery pack according to an embodiment of this disclosure shown in FIG. 5.
FIG. 7 is a schematic diagram of an electric apparatus using a secondary battery as a power source according to an embodiment of this disclosure.
FIG. 8 shows charge-discharge curves obtained by performing a charge-discharge test on button cells prepared from Materials 1-1 and 1-6 separately.
FIG. 9 shows charge-discharge curves obtained by performing a charge-discharge test on a button cell prepared from Material 2-1.
FIG. 10 is an image obtained by scanning Material 1-1 using a transmission electron microscope (TEM).
FIG. 11 is an image obtained by scanning a negative electrode plate prepared in Example 1 of this disclosure using a scanning electron microscope (SEM).

Description of reference signs:
1. battery pack; 2. upper box body; 3. lower box body; 4. battery module; 5. battery cell; 51. housing body; 52. electrode assembly; 53. top cover assembly; 10. negative electrode plate; 101. negative electrode current collector; 102. negative electrode film layer; 102a. first surface; 102b. second surface; 1021. first region; 1022. second region; and 1023. middle region.

### DESCRIPTION OF EMBODIMENTS

The following specifically discloses in detail embodiments of the secondary battery and electric apparatus of this disclosure, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this disclosure and are not intended to limit the subject matter recorded in the claims.

"Ranges" disclosed in this disclosure are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this disclosure, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this disclosure can be combined with each other to form new technical solutions.

Unless otherwise stated, all the technical features and optional technical features of this disclosure can be combined with each other to form new technical solutions.

Unless otherwise stated, the terms used in this disclosure have well-known meanings as commonly understood by persons skilled in the art.

Unless otherwise stated, numerical values of parameters mentioned in this disclosure may be measured by using various measurement methods commonly used in the art, for example, they may be measured by using the measurement methods provided in this disclosure.

Unless otherwise stated, in this disclosure, the term "active ions" refers to ions that can be intercalated and deintercalated between a positive electrode and a negative electrode of a secondary battery, including but not limited to lithium ions.

Currently, to increase the energy density of secondary batteries, thick coating is usually performed on the negative electrode plate to prepare a high-loading electrode. However, although the thick coating design increases the energy density of the cell by increasing the total amount of the active material, the increased thickness enlarges the charge migration path, and thus limits the transmission kinetics of electrons and active ions, deteriorating the kinetic performance of the secondary battery, such as the fast charging performance.

In view of this, this disclosure provides a secondary battery and an electric apparatus. The secondary battery has improved kinetic performance and high energy density. The following describes the present invention and optional embodiments more specifically.

### Secondary battery

This disclosure provides a secondary battery. The term "secondary battery" used herein refers to a battery cell, a battery module, or a battery pack, which are described separately below.

The secondary battery cell includes a positive electrode plate, a negative electrode plate, an electrolyte, and a separator. During charging and discharging of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent short circuit between positive and negative electrodes and to allow the ions to pass through.

### Negative electrode plate

The secondary battery of this disclosure includes a negative electrode plate. The negative electrode plate includes a negative electrode current collector and a negative electrode film layer located on at least one surface of the negative electrode current collector, and the negative electrode film layer has a first surface facing away from the negative electrode current collector and a second surface disposed opposite the first surface. Thickness of the negative electrode film layer is denoted as H, a region from the first surface of the negative electrode film layer to a thickness of 0.3H is denoted as a first region of the negative electrode film layer, and a region from the second surface of the negative electrode film layer to a thickness of 0.3H is denoted as a second region of the negative electrode film layer. The first region includes a first negative electrode active material, and the second region includes a second negative electrode active material. The first negative electrode active material includes a matrix and a carbon coating layer formed on at least part of a surface of the matrix; and a lithiation plateau voltage of the first negative electrode active material is 0.118 V to 0.140 V, where a charge-discharge test is performed on a button cell prepared from a test material at a delithiation rate of 0.1C and a lithiation rate of 0.05C separately to obtain a charge-discharge curve within a range of 0.005 V to 2.0 V, and a ratio of a total lithiation energy to a total lithiation capacity within the range of 0.005 V to 2.0 V is defined as a lithiation plateau voltage of the test material. Gram capacity of the second negative electrode active material is greater than that of the first negative electrode active material.

In this disclosure, with the first negative electrode active material in the upper layer (first region) being set to include the carbon coating layer, more ion transmission channels can be provided on the surface of the matrix due to good conductivity and ion transmission capability, thereby increasing the lithiation channels. In addition, the carbon coating layer reduces the external surface area of the matrix, effectively reducing the co-intercalation phenomenon of the electrolyte, thereby reducing the interface impedance. However, the presence of the carbon coating layer also affects the gram capacity of the material to some extent. The lithiation channels and interface impedance are important factors affecting the speed and efficiency of lithium ion transmission, which in turn affect the lithiation plateau voltage. In this disclosure, making the first negative electrode active material have a lithiation plateau voltage of 0.118 V to 0.140 V (greater than 0.118 V) means that the material allows rapid deintercalation of active ions from the surface of the first negative electrode active material and is less prone to lithium precipitation while maintaining a relatively high gram capacity, thereby effectively improving the kinetic performance of the secondary battery. Furthermore, with the gram capacity of the second negative electrode active material in the lower layer (second region) being set to be greater than that of the first negative electrode active material, the secondary battery can have high energy density.

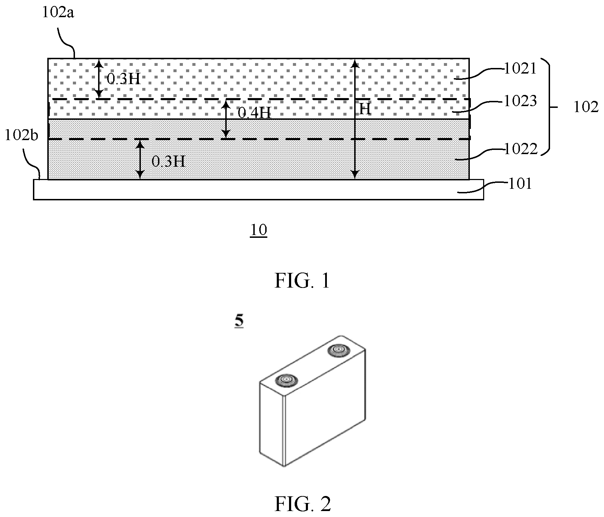

Referring to FIG. 1, FIG. 1 is a schematic diagram of a negative electrode plate according to an embodiment of this disclosure. As shown in FIG. 1, a negative electrode plate 10 includes a negative electrode current collector 101 and a negative electrode film layer 102 formed on at least one surface of the negative electrode current collector 101, and the negative electrode film layer 102 has a first surface 102a facing away from the negative electrode current collector 101 and a second surface 102b disposed opposite the first surface 102a. Thickness of the negative electrode film layer 102 is denoted as H. The thickness H of the negative electrode film layer refers to thickness of the negative electrode film layer on one side of the negative electrode current collector. A region from the first surface 102a of the negative electrode film layer to a thickness of 0.3H is denoted as a first region 1021 (upper layer) of the negative electrode film layer. A region from the second surface 102b of the negative electrode film layer to a thickness of 0.3H is denoted as a second region 1022 (lower layer) of the negative electrode film layer. The first region 1021 includes a first negative electrode active material, and the second region 1022 includes a second negative electrode active material. A region between the first region 1021 and the second region 1022 is denoted as a middle region 1023. It is easily understood that the range of the middle region 1023 may contain only the first negative electrode active material, only the second negative electrode active material, both the first negative electrode active material and the second negative electrode active material, or other negative electrode active materials known in the art except the first negative electrode active material and the second negative electrode active material of this disclosure.

It should be understood that in the embodiment shown in FIG. 1, the second surface 102b is in contact with the upper surface of the negative electrode current collector 101, but the structure of the negative electrode plate of this disclosure is not limited thereto. For example, there may be an additional layer between the negative electrode film layer 102 and the negative electrode current collector 101. In this case, the second surface 102b is not in direct contact with the negative electrode current collector 101.

It should also be understood that although distinct boundaries between the regions are shown in FIG. 1, such distinct interfaces may not exist in the product.

In some embodiments, the lithiation plateau voltage of the first negative electrode active material is 0.123 V to 0.135 V. The lithiation rate of the battery is positively correlated with the electrode potential, that is, a higher electrode potential indicates a higher lithiation rate of the battery. With the lithiation plateau voltage falling within this range, lithiation is performed at a relatively high voltage, which is conducive to improving the kinetic performance of the secondary battery and not prone to causing lithium precipitation.

In some embodiments, the carbon coating layer includes soft carbon. The lithium storage process of soft carbon is mainly the adsorption of active lithium ions at its structural defects, edges, and micropores, which has relatively fast reaction kinetics. This is conducive to improving the kinetic performance of the secondary battery.

In this disclosure, the matrix and the carbon coating layer of the first negative electrode active material can be distinguished using a transmission electron microscope (TEM) of the material. In a transmission electron microscope (TEM) image of the first negative electrode active material, the matrix has regular lattice fringes, while the carbon coating layer has no obvious lattice fringes and is soft carbon.

In this disclosure, the primary particles and the secondary particles have the meanings well known in the art. The primary particles are particles not in an agglomerated state. The secondary particles are particles in an agglomerated state that are formed by accumulating two or more primary particles. The primary particles and the secondary particles can be distinguished using a scanning electron microscope (SEM) image.

In some embodiments, in the first negative electrode active material, a number percentage of a secondary particle graphite material is greater than or equal to 60%, for example, 60%, 65%, 70%, 75%, 80%, or within a range defined by any two of these values. Optionally, the number percentage of the secondary particle graphite material is 75%. With a combination of two types of graphite materials (that is, primary particle graphite material and secondary particle graphite material) being used in the region (that is, first region) of the negative electrode film layer facing away from the negative electrode current collector, the granulation structure of the secondary particle graphite material is conducive to reducing an OI value of the material, and thus is beneficial to the fast charging performance. In addition, the single particle graphite material (that is, primary particle graphite material) is conducive to increasing the active specific surface area and reducing the charge transfer resistance (Rct), further improving the fast charging performance of the battery. Moreover, using the secondary particles as the majority of the first negative electrode active material achieves high isotropy, so that the swelling of the secondary battery during cycling can be distributed in all directions, reducing the swelling of the electrode plate, thereby improving the cycling performance.

In some embodiments, a powder OI value of the first negative electrode active material is 2.0 to 6.0. For example, the powder OI value of the first negative electrode active material may be 2, 3, 4, 4.5, 5, 6, or within a range defined by any two of these values. Optionally, the powder OI value of the first negative electrode active material is 4.5 to 6.0. Thus, lithium ions can be intercalated from all directions, improving the charging capability of the secondary battery.

In this disclosure, the powder optimization index (Optimization Index, OI for short) is a quantitative indicator used to characterize the degree of crystal orientation of a powder sample. It evaluates crystal growth and alignment quality by comparing a ratio of an integral area of a diffraction peak of a (004) crystal plane of crystalline carbon to an integral area of a diffraction peak of a (110) crystal plane of the crystalline carbon in the powder sample. The OI value can be measured by using instruments and methods known in the art. For example, an X-ray diffraction pattern of the powder sample can be obtained in accordance with JIS K 0131-1996 and JB/T 4220-2011, and the powder OI value of the sample is calculated according to OI value = I(004)/I(110). I(004) is the integral area of the diffraction peak of the (004) crystal plane of the crystalline carbon in the powder sample, and I(110) is the integral area of the diffraction peak of the (110) crystal plane of the crystalline carbon in the powder sample. In the X-ray diffraction analysis test in the embodiments of this disclosure, a copper target may be used as an anode target, a CuKα ray is used as a radiation source, a ray wavelength λ is 1.5418 Å, a scanning 2θ angle is 20° to 80°, and a scanning rate is 4°/min.

In some embodiments, powder compacted density of the first negative electrode active material under a pressure of 50000 N is less than that of the second negative electrode active material under a pressure of 50000 N. Therefore, porosity of the first region is greater than that of the second region, which is conducive to increasing the contact opportunities between the upper region and active ions in the electrolyte, and enables faster migration of the active ions during charging and discharging, improving the lithiation kinetics of the material, thereby improving the fast charging performance of the battery.

In some embodiments, the powder compacted density of the first negative electrode active material under a pressure of 50000 N is 1.74 g/cc to 1.79 g/cc. For example, the powder compacted density of the first negative electrode active material under a pressure of 50000 N is 1.74 g/cc, 1.75 g/cc, 1.76 g/cc, 1.79 g/cc, or within a range defined by any two of these values. This helps to provide an appropriate porosity in the first region, and thus facilitates the infiltration of the electrolyte, thereby improving the kinetic performance of the secondary battery.

In some embodiments, the powder compacted density of the second negative electrode active material under a pressure of 50000 N is 1.95 g/cc to 2.04 g/cc. Maintaining the powder compacted density of the second negative electrode active material within the foregoing range helps to provide an appropriate porosity in the first region and increase the energy density of the secondary battery. For example, the powder compacted density of the second negative electrode active material under a pressure of 50000 N may be 1.95 g/cc, 1.96 g/cc, 1.97 g/cc, 1.98 g/cc, 1.99 g/cc, 2.00 g/cc, 2.01 g/cc, 2.02 g/cc, 2.03 g/cc, 2.04 g/cc, or within a range defined by any two of these values.

In this disclosure, the powder compacted density of the material is the mass per unit volume of the powder under specified conditions, and can be measured by using instruments and methods known in the art, for example, the powder compacted density can be measured by using an electronic pressure testing machine (for example, it may be a UTM7305 electronic pressure testing machine) in accordance with GB/T 24533-2009. An example test method is as follows: weigh 1 g of sample powder, add it to a mold with a bottom area of 1.327 cm², pressurize it to 50000 N, hold the pressure for 30s, release the pressure, hold for 10s, record the data, and then calculate the powder compacted density of the material under a pressure of 50000 N.

In some embodiments, particle size by volume D_{V}50 of the first negative electrode active material is 7.8 µm to 15.8 µm. Maintaining the particle size by volume D_{V}50 of the first negative electrode active material within the foregoing range helps to form a good pore distribution state in the first region of the electrode plate, and thus is more conducive to improving the transmission performance of ions and electrons, improving the fast charging performance of the battery. For example, the particle size by volume D_{V}50 of the first negative electrode active material is 7.8 µm, 8.0 µm, 8.5 µm, 9.0 µm, 9.5 µm, 10.0 µm, 10.5 µm, 11.0 µm, 11.5 µm, 12.0 µm, 12.5 µm, 15.8 µm, or within a range defined by any two of these values.

In some embodiments, particle size distribution (D_{V}90-D_{V}10)/D_{V}50 of the first negative electrode active material is 0.90 to 1.50. The particle size distribution falling within this range indicates a good distribution of the negative electrode active material particles, so that the upper region of the negative electrode film layer can have an appropriate pore structure, which can reduce the ion liquid-phase transmission difficulty, further improving the kinetic performance of the secondary battery. For example, the particle size distribution (D_{V}90-D_{V}10)/D_{V}50 of the first negative electrode active material is 0.90, 0.95, 1.00, 1.05, 1.10, 1.15, 1.20, 1.25, 1.30, 1.35, 1.40, 1.45, 1.50, or within a range defined by any two of these values.

In this disclosure, the particle sizes by volume D_{V}10, D_{V}50, and D_{V}90 of the material have the meanings well known in the art, which indicate particle sizes of the material corresponding to cumulative volume distribution percentages reaching 10%, 50%, and 90% respectively, and can be measured by using instruments and methods known in the art. For example, they can be measured by using a laser particle size analyzer in accordance with GB/T 19077-2016. The test instrument may be a laser particle size analyzer of Mastersizer 3000 from Malvern Instruments Ltd. of UK.

In some embodiments, BET specific surface area of the first negative electrode active material is 0.6 m²/g to 1.3 m²/g. With the specific surface area of the first negative electrode active material falling within the foregoing range, the first negative electrode active material can have low surface side reaction activity, which can reduce the consumption of active ions by SEI film formation, increasing the initial coulombic efficiency of the secondary battery. In addition, the active ion transmission performance is high, improving the kinetic performance of the secondary battery. For example, the BET specific surface area of the first negative electrode active material is 0.6 m²/g, 0.7 m²/g, 0.8 m²/g, 0.9 m²/g, 1.0 m²/g, 1.1 m²/g, 1.2 m²/g, 1.3 m²/g, or within a range defined by any two of these values.

In this disclosure, the specific surface area of the material has the meaning well known in the art and can be measured by using instruments and methods known in the art, for example, the specific surface area can be measured by using a nitrogen adsorption specific surface area analysis test method and calculated by using a BET (Brunauer Emmett Teller) method in accordance with GB/T 19587-2017. The test instrument may be a specific surface area and pore size analyzer of Tri-Star 3020 from Micromeritics of USA.

In some embodiments, the gram capacity of the first negative electrode active material is 350.5 mAh/g to 358.5 mAh/g, for example, the gram capacity of the first negative electrode active material is 350.5 mAh/g, 351.0 mAh/g, 352.0 mAh/g, 353.0 mAh/g, 354.0 mAh/g, 355.0 mAh/g, 356.0 mAh/g, 357.0 mAh/g, 358.0 mAh/g, 358.5 mAh/g, or within a range defined by any two of these values. With the gram capacity of the first negative electrode active material falling within the foregoing range, the secondary battery can maintain the energy density while having good kinetic performance.

In this disclosure, the gram capacity of the material is a ratio of an electric capacity that an active substance can release to a mass of the active substance, and can be measured by using methods known in the art. An example test method is as follows: mix sample powder, a conductive agent, a binder, and other optional additives at a specific mass ratio with a solvent to produce a uniform slurry, apply the produced slurry onto a surface of negative electrode current collector copper foil, dry it in an oven for later use, dissolve electrolytic salt in an organic solvent to prepare an electrolyte of a certain concentration, then use a metal lithium plate as a counter electrode and a polyethylene (PE) film as a separator, and assemble them with the electrolyte in an argon-protected glove box into a CR2430 button cell. After the obtained button cell is left standing for 12 h, at 25°C, discharge the cell to 0.005 V at a constant current of 0.15 mA, leave it standing for 10 minutes, discharge it to 0.005 V at a constant current of 50 µA, leave it standing for 10 minutes, discharge it to 0.005 V at a constant current of 10 µA, then charge it to 2.0 V at a constant current of 0.3 mA, and record the charge capacity. A ratio of the charge capacity to the sample mass is the gram capacity of the corresponding material. In some embodiments, the gram capacity of the second negative electrode active material is 359 mAh/g or more. Optionally, the gram capacity of the second negative electrode active material is 360 mAh/g to 366 mAh/g. Maintaining the gram capacity of the second negative electrode active material within the foregoing range helps to increase the gram capacity of the negative electrode film layer, thereby increasing the energy density of the secondary battery. For example, the gram capacity of the second negative electrode active material may be 359 mAh/g, 360 mAh/g, 361 mAh/g, 362 mAh/g, 363 mAh/g, 364 mAh/g, 365 mAh/g, 366 mAh/g, or within a range defined by any two of these values. In some embodiments, La(110) of the second negative electrode active material is 130 nm to 175 nm, and Lc(002) is 30 nm to 42 nm, where La(110) represents a crystallite size along an a-axis in a (110) crystal plane of the material, and Lc(002) represents a crystallite size along a c-axis in a (002) crystal plane of the material.

In this disclosure, the relatively large La of the second negative electrode active material indicates that the crystallite size of the second negative electrode active material is relatively large, which increases lithiation sites on the surface, resulting in high gram capacity. In addition, the large crystallite size can also reduce the number of grain boundaries between crystallites in the material, further increasing the lithiation sites, thereby reducing the adverse effects on the gram capacity and powder compacted density and increasing the gram capacity and powder compacted density of the material. Lc of the second negative electrode active material falling within the foregoing range is conducive to reducing the stacking of graphite crystallites, and thus reduces the number of grain boundaries between crystallites, increasing the lithiation sites on the surface of the material, thereby increasing the gram capacity of the material. Thus, the second negative electrode active material located in the second region has high gram capacity and high compacted density, so that the secondary battery can have high energy density.

La(110) of the second negative electrode active material is 130 nm to 175 nm, and Lc(002) is 30 nm to 42 nm. For example, La(110) is 130 nm, 135 nm, 140 nm, 145 nm, 150 nm, 155 nm, 160 nm, 165 nm, 170 nm, 172 nm, 173 nm, 175 nm, or within a range defined by any two of these values, and Lc(002) is 30 nm, 31 nm, 32 nm, 33 nm, 34 nm, 35 nm, 36 nm, 37 nm, 38 nm, 39 nm, 40 nm, 41 nm, 42 nm, or within a range defined by any two of these values. Optionally, La(110) of the second negative electrode active material is 132 nm to 172 nm, and Lc(002) is 30 nm to 36 nm. Maintaining La(110) and Lc(002) of the second negative electrode active material within the foregoing ranges is more conducive to increasing the gram capacity and compacted density of the second negative electrode active material, so that the secondary battery can have high energy density.

In this disclosure, La(110) and Lc(002) of the material can be measured by using instruments and methods known in the art. For example, the negative electrode plate disassembled from the secondary battery can be washed with an organic solvent such as DMC and then dried. Then, the washed negative electrode plate is soaked in NMP for ultrasonic treatment to separate the copper foil and obtain the negative electrode material. The negative electrode material is dried and then calcined at 350°C to 500°C, washed multiple times with water, and dried at 80°C to obtain the first negative electrode active material. Testing is performed using an X-ray diffractometer (such as Bruker D8 Discover) in accordance with JIS K 0131-1996 and JB/T 4220-2011 to obtain the peak intensity and full width at half maximum (FWHM) of the diffraction peak corresponding to the (110) crystal plane and the peak intensity and full width at half maximum (FWHM) of the diffraction peak corresponding to the (002) crystal plane of the first negative electrode active material, and then La(110) and Lc(002) are calculated according to the Scherrer formula.

In some embodiments, La(110)/Lc(002) of the second negative electrode active material is 3.5 to 5.5. In this disclosure, with La(110)/Lc(002) of the second negative electrode active material falling within the foregoing range, the number of crystallites in the material is small, so the number of grain boundaries between crystal grains is small, which is conducive to increasing the lithiation sites on the surface of the material, increasing the gram capacity of the material, thereby increasing the energy density of the secondary battery. For example, La(110)/Lc(002) may be 3.5, 3.8, 4.0, 4.2, 4.4, 4.6, 4.8, 5.0, 5.2, 5.5, or within a range defined by any two of these values. In some optional embodiments, in the second negative electrode active material, La(110)/Lc(002) is 4.5 to 5.5.

In some embodiments, a charge-discharge test is performed on a button cell prepared from the second negative electrode active material at a delithiation rate of 0.1C and a lithiation rate of 0.05C separately to obtain a charge-discharge curve within a range of 0.005 V to 2.0 V, where in the discharge curve, a lithiation plateau exists in a voltage range of 0.005 V to 0.07 V, and a proportion X1 of a discharge capacity corresponding to the lithiation plateau to a total discharge capacity of the button cell is 43% or more.

In this disclosure, the charge-discharge test is performed using the following method: mix sample powder, conductive agent carbon black (Super P), and binder polyvinylidene fluoride (PVDF) at a mass ratio of 91.6:1.8:6.6 with solvent N-methylpyrrolidone (NMP) to produce a uniform slurry, apply the produced slurry onto a surface of negative electrode current collector copper foil, dry it in an oven for later use, mix ethylene carbonate (EC), ethyl methyl carbonate (EMC), and diethyl carbonate (DEC) at a volume ratio of 1:1:1 to obtain an organic solvent, dissolve LiPF₆ in the organic solvent to prepare an electrolyte with a concentration of 1 mol/L, then use a metal lithium plate as a counter electrode and a polyethylene (PE) film as a separator, and assemble them with the electrolyte in an argon-protected glove box into a CR2430 button cell. After the obtained button cell is left standing for 12 h, at 25°C, discharge the cell to 0.005 V at a constant current of 0.05C, leave it standing for 10 minutes, discharge it to 0.005 V at a constant current of 50 µA, leave it standing for 10 minutes, discharge it to 0.005 V at a current of 10 µA, and then charge it to 2.0 V at a constant current of 0.1C to obtain the relationship between the charge-discharge capacity of the material and the voltage, that is, the charge-discharge curve.

In this disclosure, the charge-discharge test is performed on the button cell prepared from the second negative electrode active material to obtain the charge-discharge curve. In the discharge curve, the proportion X1 of the discharge capacity corresponding to the lithiation plateau in the voltage range of 0.005 V to 0.07 V to the total discharge capacity of the button cell is 43% or more. The gram capacity of the second negative electrode active material is high, which is conducive to increasing the energy density of the secondary battery. Although the mechanism is not yet clear, the inventors argue that during lithiation of the graphite material, as the amount of intercalated lithium ions increases, graphite intercalation compounds of different stages are gradually formed, such as LiC₂₄, LiC₁₂, and LiC₆. The formation of the graphite intercalation compounds of different stages corresponds to lithiation plateaus in different voltage ranges in the charge-discharge curve of the graphite material. The graphite intercalation compounds of different stages have different theoretical capacities, for example, the theoretical capacity of LiC₆ is 372 mAh/g, while the theoretical specific capacity of LiC₁₂ is 186 mAh/g. Therefore, during lithiation, more LiC₆ formed (that is, corresponding to the lithiation plateau in the voltage range of 0.005 V to 0.07 V) indicates greater corresponding capacity contribution, and the gram capacity of the graphite material is higher. For example, X1 may be 43%, 44%, 45%, 46%, 47%, 48%, 49%, 50%, or within a range defined by any two of these values.

In some embodiments, the proportion X1 of the discharge capacity corresponding to the lithiation plateau to the total discharge capacity of the button cell is 43% to 50%, and optionally 43% to 47%.

In some embodiments, graphitization degree of the second negative electrode active material is 94.0% to 96.0%. With the graphitization degree of the second negative electrode active material falling within the foregoing range, the first negative electrode active material can have high compacted density and gram capacity, thereby increasing the energy density of the secondary battery. For example, the graphitization degree of the second negative electrode active material may be 94.0%, 94.5%, 95.0%, 95.5%, 96.0%, or within a range defined by any two of these values. In some optional embodiments, the graphitization degree of the second negative electrode active material is 94.2% to 95.8%.

In this disclosure, the graphitization degree of the material is a proportion of carbon existing in the graphite structure form in the material, and can be measured by using instruments and methods known in the art. For example, an X-ray diffractometer (such as Bruker D8 Discover) can be used for measurement in accordance with JIS K 0131-1996 and JB/T 4220-2011 to obtain the average interlayer spacing d₀₀₂ of the C(002) crystal plane in the crystal structure of the material, and then the graphitization degree is calculated according to the formula g = (0.344-d₀₀₂)/(0.344-0.3354)×100%. In the foregoing formula, d₀₀₂ is the average interlayer spacing of the C(002) crystal plane in the crystal structure of the material, expressed in nanometers (nm).

In some embodiments, particle size by volume D_{V}50 of the second negative electrode active material is 14.5 µm to 18.0 µm, which can be measured by using the foregoing method. For example, the particle size by volume D_{V}50 of the first negative electrode active material may be 14.5 µm, 15.0 µm, 15.5 µm, 16.0 µm, 16.5 µm, 17.0 µm, 17.5 µm, 18.0 µm, or within a range defined by any two of these values. In some optional embodiments, the particle size by volume D_{V}50 of the second negative electrode active material is 15.0 µm to 17.5 µm.

In some embodiments, particle size distribution (D_{V}90-D_{V}10)/D_{V}50 of the second negative electrode active material is 0.90 to 1.25. For example, the particle size distribution (D_{V}90-D_{V}10)/D_{V}50 of the second negative electrode active material is 0.90, 0.95, 1.00, 1.05, 1.10, 1.15, 1.20, 1.25, or within a range defined by any two of these values. In some optional embodiments, the particle size distribution (D_{V}90-D_{V}10)/D_{V}50 of the second negative electrode active material is 0.90 to 1.20.

In some embodiments, specific surface area of the second negative electrode active material is 0.8 m²/g to 2.1 m²/g, which can be measured by using the foregoing method. With the specific surface area of the second negative electrode active material falling within the foregoing range, the second negative electrode active material can have low surface side reaction activity, which can reduce the consumption of active ions by SEI film formation, increasing the initial coulombic efficiency of the secondary battery. In addition, the active ion transmission performance is high, improving the kinetic performance of the secondary battery. For example, the specific surface area of the second negative electrode active material may be 0.8 m²/g, 1.0 m²/g, 1.2 m²/g, 1.4 m²/g, 1.6 m²/g, 1.8 m²/g, 2.0 m²/g, 2.1 m²/g, or within a range defined by any two of these values.

In some embodiments, in the negative electrode film layer, a mass ratio of the first negative electrode active material to the second negative electrode active material is 4:6 to 6:4. With the mass ratio of the first negative electrode active material to the second negative electrode active material falling within the foregoing range, the secondary battery can maintain the energy density while having excellent kinetic performance. For example, the mass ratio of the first negative electrode active material to the second negative electrode active material may be 4:6, 5:5, 6:4, or within a range defined by any two of these values.

In some embodiments, compacted density of the negative electrode film layer is 1.50 g/cc to 1.90 g/cc. Maintaining the powder compacted density of the negative electrode film layer within the foregoing range helps the negative electrode film layer have high capacity and good active ion and electron transmission performance, so that the secondary battery can have high energy density and good kinetic performance. For example, the compacted density of the negative electrode film layer is 1.50 g/cc, 1.55 g/cc, 1.60 g/cc, 1.65 g/cc, 1.70 g/cc, 1.75 g/cc, 1.80 g/cc, 1.85 g/cc, 1.90 g/cc, or within a range defined by any two of these values. In some optional embodiments, the compacted density of the negative electrode film layer is 1.55 g/cc to 1.85 g/cc.

In some embodiments, surface density of the negative electrode film layer is 6.0 mg/cm² to 24.0 mg/cm². Maintaining the surface density of the negative electrode film layer within the foregoing range helps the negative electrode film layer have high capacity and good active ion and electron transmission performance, so that the secondary battery can have high energy density and good kinetic performance. For example, the surface density of the negative electrode film layer may be 6.0 mg/cm², 6.5 mg/cm², 8.0 mg/cm², 10.0 mg/cm², 12.0 mg/cm², 14.0 mg/cm², 16.0 mg/cm², 18.0 mg/cm², 20.0 mg/cm², 22.0 mg/cm², 24.0 mg/cm², or within a range defined by any two of these values. In some optional embodiments, the surface density of the negative electrode film layer is 6.5 mg/cm² to 22.5 mg/cm².

In some embodiments, the thickness of the negative electrode film layer is 60 µm to 240 µm. With the thickness of the negative electrode film layer falling within the foregoing range, the negative electrode film layer can have high capacity and high active ion and electron transmission performance, so that the secondary battery can have high energy density and good storage performance and kinetic performance. For example, the thickness of the negative electrode film layer may be 60 µm, 80 µm, 90 µm, 100 µm, 110 µm, 120 µm, 140 µm, 160 µm, 180 µm, 200 µm, 220 µm, 240 µm, or within a range defined by any two of these values. In some optional embodiments, the thickness of the negative electrode film layer is 90 µm to 220 µm.

In this disclosure, the thickness of the negative electrode film layer has the meaning well known in the art, and can be measured by using methods known in the art, for example, using a micrometer (such as model Mitutoyo293-100 with 0.1 µm resolution). The thickness range given in this disclosure is a thickness range of the negative electrode film layer on one side of the negative electrode current collector.

The film layer is set as a double layer, and the upper region (first region) has a greater porosity than the lower region (second region), so the contact opportunities between the upper region and active ions in the electrolyte are increased, which enables faster migration of the active ions during charging and discharging, improving the lithiation kinetics of the material, thereby improving the fast charging performance of the battery.

In this disclosure, the porosity represents the number of pores per unit area in the channel from the film layer to the matrix, where the porosity of the first region and the second region can be measured by using any known method in the art. For example, after the cold-pressed electrode plate is sampled and cross-section polishing treatment is performed on the electrode plate using a cross section ion polisher (for example, IB-09010 CP argon ion cross section polisher from JEOL of Japan), the longitudinal section of the negative electrode plate is scanned using a scanning electron microscope (for example, Sigma 300 scanning electron microscope from ZEISS of Germany). Multiple test regions are arbitrarily selected in the test sample, images of the multiple test regions are obtained using the scanning electron microscope, and the ImageJ software is used to perform threshold segmentation on the obtained scanning images characterizing the first region and the second region, where the gray-white contrast region is particles, and the black contrast region is pores. Through computer image recognition, the threshold division method is used to parse the pore portion to obtain the porosity of different depth regions on the surface of the electrode plate. Alternatively, the battery can be disassembled to obtain the negative electrode plate, the electrode plate is cut into 6 mm*6 mm size and fixed on a sample holder, and the cross-section of the negative electrode plate is prepared using the cross section ion polisher (for example, IB-09010 CP argon ion cross section polisher from JEOL of Japan) and then scanned using the scanning electron microscope (for example, Sigma 300 scanning electron microscope from ZEISS of Germany). Through computer image recognition, the threshold division method is used to parse the pore portion to obtain the porosity of different depth regions on the surface of the electrode plate.

In some embodiments, in the first negative electrode active material, relative to the mass of the matrix, a mass percentage of the carbon coating layer is 0.52% to 2.35%.

In some embodiments, a preparation method of the first negative electrode active material includes:
providing a matrix material; and
mixing the matrix material and an organic carbon source, followed by heat treatment, to obtain the first negative electrode active material;
where a mass ratio of the matrix material to the organic carbon source is 100:1.5 to 100:8.

Thus, with the matrix material and the organic carbon source being set to fall within the foregoing mass ratio range, the obtained first negative electrode active material can have a lithiation plateau voltage of 0.118 V to 0.140 V.

### Positive electrode plate

The positive electrode plate includes a positive electrode current collector and a positive electrode film layer disposed on at least one surface of the positive electrode current collector, and the positive electrode film layer includes a positive electrode active material.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, when the battery cell is a lithium secondary battery, the positive electrode active material may be a well-known positive electrode active material used for lithium secondary batteries in the art. For example, the positive electrode active material may include at least one of the following materials: olivine-structured lithium-containing phosphate, lithium transition metal oxide, and respective modified compounds thereof. However, this disclosure is not limited to these materials, but may use other conventional materials that can be used as positive electrode active materials for batteries instead. One of these positive electrode active materials may be used alone, or more than two of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂

(NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.1}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, when the battery cell is a sodium secondary battery, the positive electrode active material may be a well-known positive electrode active material used for sodium secondary batteries in the art. For example, the positive electrode active material may include sodium transition metal oxide, polyanionic compound, Prussian blue compound, and the like.

Li experiences deintercalation and consumption during charging and discharging of the battery, so Li has different molar percentages when the battery is discharged to different states. In the enumeration of the positive electrode active material in this disclosure, the molar percentage of Li is in the initial state of the material, that is, the state before feeding. When the positive electrode active material is applied to the battery system and undergoes charge-discharge cycles, the molar percentage of Li will change.

In the enumeration of the positive electrode active material in this disclosure, the molar percentage of O is only a theoretical state value. Lattice oxygen release will cause changes in the molar percentage of oxygen, resulting in fluctuations in the actual molar percentage of O.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate can be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing, to obtain the positive electrode plate.

### Electrolyte

The electrolyte conducts ions between the positive electrode plate and the negative electrode plate. The electrolyte is not limited to any specific type in this disclosure, and may be selected based on needs. For example, the electrolyte may be in a liquid state, a gel state, or an all-solid state.

In some embodiments, the electrolyte is an electrolyte solution. The electrolyte solution includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte solution further optionally includes an additive. For example, the additive may include a negative electrode film-forming additive or a positive electrode film-forming additive, or may include an additive capable of improving some performance of the battery, for example, an additive for improving overcharge resistance of the battery, or an additive for improving high-temperature or low-temperature performance of the battery.

### Separator

In some embodiments, the battery cell further includes a separator. The separator is not limited to a particular type in this disclosure, and may be any well-known porous separator with good chemical stability and mechanical stability.

In some embodiments, material of the separator may include at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the battery cell may include an outer package. The outer package may be used for packaging the foregoing electrode assembly and electrolyte.

In some embodiments, the outer package of the battery cell may be a hard shell, for example, a hard plastic shell, an aluminum shell, or a steel shell. The outer package of the battery cell may alternatively be a soft pack, for example, a soft pouch. Material of the soft pack may be plastic. Polypropylene, polybutylene terephthalate, polybutylene succinate, and the like may be listed as the plastic.

Shape of the battery cell is not particularly limited in this disclosure, and the battery cell may be cylindrical, rectangular, or of any other shapes. For example, FIG. 2 shows a rectangular battery cell 5 as an example.

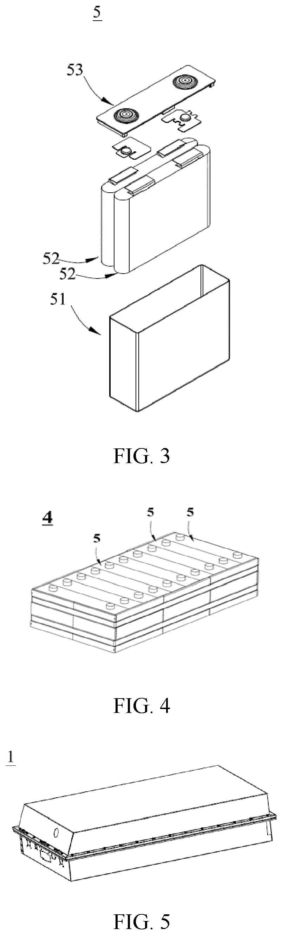

In some embodiments, referring to FIG. 3, the outer package may include a housing body 51 and a top cover assembly 53. The housing body 51 may include a base plate and a side plate connected onto the base plate, and the base plate and the side plate enclose an accommodating cavity. The housing body 51 has an opening communicating with the accommodating cavity, and the top cover assembly 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. The battery cell 5 may include one or more electrode assemblies 52, and persons skilled in the art may make choices based on actual needs.

In some embodiments, the battery cell may be assembled into a battery module, and the battery module may include one or more battery cells. The specific quantity may be chosen by persons skilled in the art based on the use and capacity of the battery module.

FIG. 4 shows a battery module 4 as an example. Referring to FIG. 4, in the battery module 4, a plurality of battery cells 5 may be sequentially arranged in a length direction of the battery module 4. Certainly, the battery cells may alternatively be arranged in any other manners. Further, the plurality of battery cells 5 may be fastened through fasteners.

Optionally, the battery module 4 may further include a housing with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art based on the use and capacity of the battery pack.

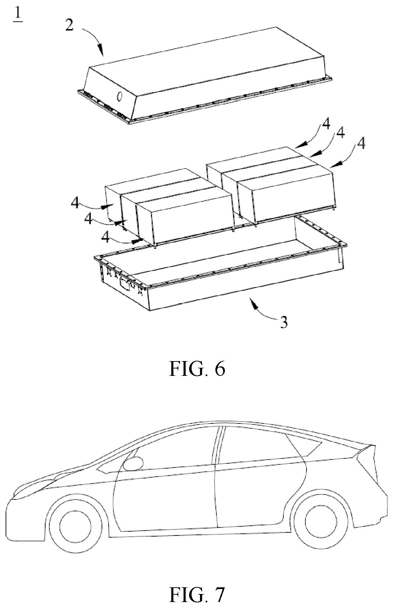

FIGs. 5 and 6 show a battery pack 1 as an example. Referring to FIGs. 5 and 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Preparation method of secondary battery

This disclosure further provides a method for preparing a secondary battery, which includes preparation of a negative electrode plate.

The negative electrode plate can be prepared in the following manner: a first slurry including a first negative electrode active material and a second slurry including a second negative electrode active material are provided, and the first slurry and the second slurry are simultaneously extruded, with the first slurry being applied onto negative electrode current collector copper foil and the second slurry being applied onto the first slurry, followed by drying and cold pressing, to obtain the negative electrode plate.

The preparation of the first negative electrode active material includes:
providing a matrix material; and
mixing the matrix material and an organic carbon source, followed by heat treatment, to obtain the first negative electrode active material;
where a mass ratio of the matrix material to the organic carbon source is 100:1.5 to 100:8, for example, 100:1.5, 100:2, 100:3, 100:4, 100:5, 100:6, 100:8, or within a range defined by any two of these values.

Thus, with the matrix material and the organic carbon source being set to fall within the foregoing mass ratio range, in the obtained first negative electrode active material, relative to the mass of the matrix, the mass percentage of the carbon coating layer is 0.52% to 2.35%, so that the lithiation plateau voltage falls within the range of 0.118 V to 0.140 V.

In this disclosure, the "surface residual carbon amount" after heat treatment is used as the "amount of the carbon coating layer". An example in which pitch is used as the raw material of the carbon coating layer during preparation is taken to show the calculation process of the mass percentage of the carbon coating layer.

Surface residual carbon amount = addition amount of pitch × coking value of pitch.

Mass percentage of carbon coating layer = surface residual carbon amount/mass of matrix × 100%.

For example, for the preparation method of the first negative electrode active material, the following method can be used, which includes steps (11) and (12).

Step (11): Provide a matrix material.

In some embodiments, step (11) includes steps (111) to (113).

Step (111): Pulverize, shape, and classify an artificial graphite precursor to obtain primary particles.

In some embodiments, the artificial graphite precursor in step (111) includes at least one of calcined coke and needle raw coke.

In some embodiments, particle size by volume D_{V}50 of the primary particles in step (111) is 6.0 µm to 9.0 µm, for example, 6.0 µm, 6.5 µm, 7.0 µm, 7.5 µm, 8.0 µm, 8.5 µm, 9.0 µm, or within a range defined by any two of these values.

Step (112): Mix a first binder and the primary particles, followed by granulation and then first heat treatment on the granulated product, to obtain a secondary particle graphite material.

The first binder is not limited to a specific type in this disclosure, and may be binders well known in the art. For example, the second binder may include solid pitch and liquid pitch.

In some embodiments, a mixing mass ratio of the primary particles to the first binder is 100:5 to 100:9, for example, 100:5, 100:6, 100:7, 100:8, 100:9, or within a range defined by any two of these values.

In some embodiments, the first heat treatment includes graphitization treatment at 2800°C to 3800°C.

Persons skilled in the art can adjust the graphitization time as needed. For example, an Acheson graphitization furnace can be used for the graphitization treatment, and when the temperature is above 2800°C, the graphitization time may be 2 days to 8 days.

Step (113): Mix the primary particles and the secondary particles to obtain the matrix material.

The purpose of mixing the primary particles and the secondary particles is to fill the primary particles between the secondary particles. Since the primary particles have small particle size and the secondary particles have large particle size, their complementary packing and filling advantages enhance the migration rate of active ions on the surface or bulk phase of the obtained first negative electrode active material.

In some embodiments, a number percentage of the secondary particles in the matrix material is greater than 60%.

Step (12): Mix the matrix material and an organic carbon source, followed by second heat treatment, to obtain the first negative electrode active material.

In some embodiments, a mass ratio of the matrix material to the organic carbon source is 100:1.5 to 100:8.

The organic carbon source is not limited to a specific type in this disclosure, and may be carbon-containing substances well known in the art. For example, the organic carbon source includes at least one of coal pitch, petroleum pitch, and phenolic resin.

In some embodiments, the second heat treatment includes carbonization treatment at 900°C to 1300°C for 1 h to 5 h.

For example, for the preparation method of the second negative electrode active material in this disclosure, the following method can be used, which includes the following steps (21) to (23).

Step (21): Crush and classify the artificial graphite precursor to obtain a first intermediate.

Step (22): Mix the first intermediate and a second binder, followed by granulation and third heat treatment, to obtain a second intermediate.

Step (23): Perform fourth heat treatment on the second intermediate to obtain the second negative electrode active material.

In this disclosure, the artificial graphite precursor refers to the raw material used for preparing the second negative electrode active material. The artificial graphite precursor is not limited to a specific type in this disclosure, and may be artificial graphite precursors well known in the art. For example, the artificial graphite precursor includes one or more of calcined coke, petroleum-based non-needle coke, petroleum-based needle coke, coal-based non-needle coke, and coal-based needle coke. The calcined coke includes coke formed by calcining the foregoing petroleum-based non-needle coke, petroleum-based needle coke, coal-based non-needle coke, and coal-based needle coke. In some optional embodiments, calcined needle coke may be used.

The manners of pulverizing, shaping, and classifying are not specifically limited in this disclosure, and may be manners of pulverizing, shaping, and classifying well known in the art.

In some embodiments, in step (21), calcined coke may be used as the artificial graphite precursor. The calcined coke has strong needle property and few intercalation structures. Using it as the artificial graphite precursor helps to develop the grain structure during graphitization and obtain a second negative electrode active material with larger La and/or higher graphitization degree, thereby promoting the intercalation of lithium ions between the layers of the second negative electrode active material, and helping to form a large amount of LiC₆ during lithiation of the second negative electrode active material.

In some embodiments, particle size by volume D_{V}50 of the first intermediate obtained in step (21) is 9.0 µm to 13.0 µm, for example, 9.0 µm, 10.0 µm, 11.0 µm, 12.0 µm, 13.0 µm, or within a range defined by any two of these values.

In some embodiments, a mixing mass ratio of the second intermediate to the first binder is 100:8 to 100:12, for example, 100:8, 100:9, 100:10, 100:11, 100:12, or within a range defined by any two of these values.

In some embodiments, particle size by volume D_{V}50 of the second intermediate is 15 µm to 18 µm, for example, 15 µm, 16 µm, 17 µm, 18 µm, or within a range defined by any two of these values.

In some embodiments, the second binder includes pitch with strong adhesion, low residual carbon, and easy graphitization. Using the foregoing pitch as the second binder can reduce the residual amount of pitch in the second negative electrode active material. Based on the characteristic of easy graphitization of pitch, the residual carbon of pitch after graphitization has a higher graphitization degree, reducing the impact of residual carbon on the gram capacity and compacted density of the second negative electrode active material.

In some embodiments, the third heat treatment includes pre-carbonization treatment at 1000°C to 1500°C for 1 h to 4 h.

In some embodiments, the fourth heat treatment includes graphitization treatment at 3000°C to 3200°C.

Persons skilled in the art can adjust the graphitization time as needed. For example, an Acheson graphitization furnace can be used for the graphitization treatment, and when the temperature is above 2800°C, the graphitization time may be 2 days to 8 days.

In some embodiments, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate can be prepared in the following manner: the foregoing constituents used for preparing the negative electrode plate, for example, the negative electrode active material (artificial graphite), the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing, to obtain the negative electrode plate.

### Electric apparatus

In addition, this disclosure further provides an electric apparatus, where the electric apparatus includes the secondary battery provided in this disclosure. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The battery cell, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a battery cell as its power source.

### Examples

The following describes examples of this disclosure. The examples described below are illustrative and only used for explaining this disclosure, and cannot be construed as limitations on this disclosure. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of first negative electrode active material

### Preparation Example 1-1

Step (11) of providing a matrix material included: step (111) of pulverizing and shaping needle raw coke using an air flow mill to obtain primary particles with a particle size by volume D_{V}50 of 8.5 µm, step (112) of mixing the primary particles and pitch at a mass ratio of 100:8, followed by granulation and then heat treatment on the granulated product at 3000°C for 7 days, to obtain secondary particles, and step (113) of mixing the secondary particles and the primary particles at a number ratio of 3:1 to obtain the matrix material.

In step (22), the obtained matrix material and pitch (coking value of 33%) were mixed at a mass ratio of 100:2, followed by carbonization at 1150°C under a nitrogen atmosphere for 4 h and then sieving, to obtain a first negative electrode active material with a soft carbon coating layer structure on the surface.

### Preparation Examples 1-2 to 1-6

The preparation methods of Preparation Examples 1-2 to 1-6 were similar to that of Preparation Example 1-1, except that the mass ratio of the mixed material to the organic carbon source was adjusted according to the values in Table 1 below.

**Table 1**

| Item | Raw material | Mass ratio of matrix to organic carbon source | No. |
|---|---|---|---|
| Preparation Example 1-1 | Needle raw coke | 100:2 | Material 1-1 |
| Preparation Example 1-2 | Needle raw coke | 100:6 | Material 1-2 |
| Preparation Example 1-3 | Needle raw coke | 100:1.5 | Material 1-3 |
| Preparation Example 1-4 | Needle raw coke | 100:7 | Material 1-4 |
| Preparation Example 1-5 | Needle raw coke | 100:8 | Material 1-5 |
| Preparation Example 1-6 | Needle raw coke | 100:0 | Material 1-6 |

### Tests for parameters of first negative electrode active material

### (1) Lithiation plateau voltage X2 test

The prepared first negative electrode active material (Material 1-1), conductive agent carbon black (Super P), and binder polyvinylidene fluoride (PVDF) were mixed at a mass ratio of 91.6:1.8:6.6 in solvent N-methylpyrrolidone (NMP) to produce a uniform slurry, the produced slurry was applied onto a surface of negative electrode current collector copper foil and dried in an oven for later use, ethylene carbonate (EC), ethyl methyl carbonate (EMC), and diethyl carbonate (DEC) were mixed at a volume ratio of 1:1:1 to obtain an organic solvent, LiPF₆ was dissolved in the organic solvent to prepare an electrolyte with a concentration of 1 mol/L, then a metal lithium plate was used as a counter electrode and a polyethylene (PE) film as a separator, and they were assembled with the electrolyte in an argon-protected glove box into a CR2430 button cell. The obtained button cell was left standing for 12 h.

At 25°C, the button cell was discharged to 0.005 V at a constant current of 0.05C, left standing for 5 minutes, then discharged to 0.005 V at a constant current of 50 µA, left standing for 5 minutes, discharged to 0.005 V at a constant current of 10 µA, and charged to 2.0 V at a constant current of 0.1C to obtain the relationship between the charge-discharge capacity of the material and the voltage, that is, the charge-discharge curve. The total lithiation energy within the range of 0.005 V to 2 V in the discharge curve was denoted as E1, the total lithiation capacity within the range of 0.005 V to 2.0 V was denoted as C3, and the lithiation plateau voltage X2 = E1/C3.

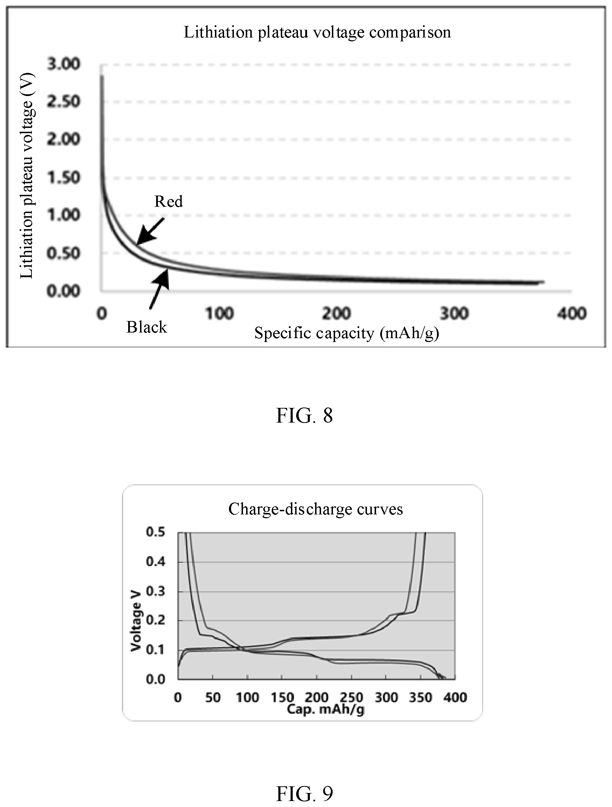

The charge-discharge curve of Material 1-1 obtained by using the foregoing method is shown as the black curve in FIG. 8. The LAND battery test system (CT2001A) was used to calculate the total lithiation energy E1 within the range of 0.005 V to 2 V and the total lithiation capacity C3 within the range of 0.005 V to 2.0 V, and then the lithiation plateau voltage was calculated to be 0.123 V. The test results are recorded in Table 2.

The charge-discharge curve of Material 1-6 obtained by using the foregoing method is shown as the red curve in FIG. 8. The LAND battery test system (CT2001A) was used to calculate the total lithiation energy E1 within the range of 0.005 V to 2 V and the total lithiation capacity C3 within the range of 0.005 V to 2.0 V, and then the lithiation plateau voltage was calculated to be 0.095 V. The test results are recorded in Table 2.

It can be seen from FIG. 8 that compared to Material 1-6, Material 1-1 has a carbon coating layer on the surface, and has an increased lithiation plateau voltage.

### (2) Powder OI value test

An X-ray diffraction pattern of the powder sample was obtained in accordance with JIS K 0131-1996 and JB/T 4220-2011, and the powder OI value of the sample was calculated according to OI value = I(004)/I(110). I(004) was the integral area of the diffraction peak of the (004) crystal plane of the crystalline carbon in the powder sample, and I(110) was the integral area of the diffraction peak of the (110) crystal plane of the crystalline carbon in the powder sample. In the X-ray diffraction analysis test, a copper target was used as an anode target, a CuKα ray was used as a radiation source, a ray wavelength λ was 1.5418 Å, a scanning 2θ angle was 20° to 80°, and a scanning rate was 4°/min. The test results are recorded in Table 2.

### (3) BET specific surface area test

The specific surface area was measured by using a nitrogen adsorption specific surface area analysis test method and calculated by using a BET (Brunauer Emmett Teller) method in accordance with GB/T 19587-2017. The nitrogen adsorption specific surface area analysis test was carried out by using a specific surface area and pore size analyzer of Tri-Star 3020 from Micromeritics of USA.

### (4) Compacted density test

1 g of sample powder was weighed, added to a mold with a bottom area of 1.327 cm², pressurized to 50000 N, with the pressure held for 30s and then released, and held for 10s. Then, the powder compacted density of the material under a pressure of 50000 N was recorded and calculated. The test results are recorded in Table 4.

### (5) Morphology test

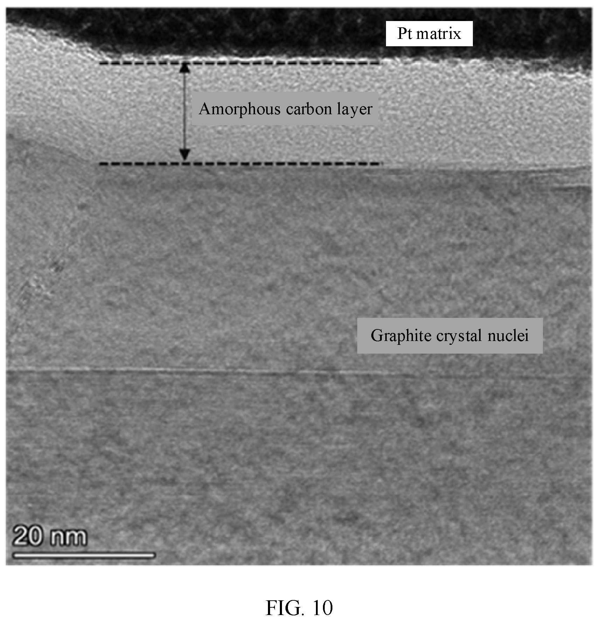

Material 1-1 obtained in Example 1 was subjected to a pre-thinning treatment using a focused ion beam (Focused Ion Beam, FIB), and then a high-resolution test was performed using a Thermo Scientific-Talos F200S G2 field emission transmission electron microscope (TEM) with Pt nanoparticles as the matrix. The test results are shown in FIG. 10.

It can be seen from FIG. 10 that Material 1-1 has graphite crystal nuclei and an amorphous carbon layer (no obvious lattice fringes) on its surface, that is, a soft carbon layer.

**Table 2**

| No. | First negative electrode active material | | | | | |
|---|---|---|---|---|---|---|
| | X2 (V) | Number percentage of secondary particles | Powder OI value | Specific surface area (m²/g) | Mass percentage of carbon coating layer (%) | Powder compacted density (g/cc) |
| Material 1-1 | 0.123 | 75% | 6.00 | 1.20 | 0.66 | 1.76 |
| Material 1-2 | 0.135 | 75% | 4.50 | 1.00 | 2.0 | 1.74 |
| Material 1-3 | 0.118 | 75% | 6.00 | 1.28 | 0.52 | 1.79 |
| Material 1-4 | 0.140 | 75% | 4.48 | 0.94 | 2.35 | 1.72 |
| Material 1-5 | 0.150 | 75% | 3.80 | 0.85 | 2.8 | 1.65 |
| Material 1-6 | 0.095 | 75% | 8.00 | 1.36 | 0 | 1.80 |

### Preparation Example 2-1

### Preparation of second negative electrode active material

In step (21), petroleum-based calcined needle coke raw material (carbon percentage of 98.5%, volatile percentage of 1.0%, and sulfur percentage of 0.5%) was pulverized and shaped using an air flow mill to obtain a shaped material (first intermediate) with D_{V}50 of 11 µm.

In step (22), granulation pitch (softening point of 200°C and coking value of 60%) was used as a granulating agent to granulate the shaped material through a granulation kettle to obtain a granulated material, where the mass ratio of the shaped material to the granulating agent was 100:8, followed by pre-carbonization at 1150°C under a nitrogen atmosphere for 2 h, to obtain a second intermediate (particle size by volume D_{V}50 of 16.5 µm).

In step (23), the second intermediate was graphitized at 3020°C, and the graphitized particles were sieved and demagnetized to obtain a second negative electrode active material (Material 2-1).

### Preparation Examples 2-2 and 2-3

The preparation methods of Preparation Examples 2-2 and 2-3 were similar to that of Preparation Example 2-1, except that the raw material and the graphitization temperature used in the preparation steps of the second negative electrode active material were adjusted according to the values in Table 3 below.

**Table 3**

| Item | Raw material | | | | Graphitization temperature (°C) | No. |
|---|---|---|---|---|---|---|
| | Raw material type | Carbon percentage | Volatile percentage | Sulfur percentage | | |
| Preparation Example 2-1 | Petroleum-based calcined needle coke | 98.5% | 1.0% | 0.5% | 3020 | Material 2-1 |
| Preparation Example 2-2 | Petroleum-based calcined needle coke | 99.0% | 0.5% | 0.5% | 3180 | Material 2-2 |
| Preparation Example 2-3 | Coal-based calcined needle coke | 98.5% | 1.0% | 0.5% | 3100 | Material 2-3 |

Tests for parameters of second negative electrode active material

### (1) La and Lc test

An X-ray diffraction pattern of the powder sample was obtained using a Bruker D8 Discover X-ray diffractometer in accordance with JIS K 0131-1996, where a copper target was used as an anode target, a CuKα ray was used as a radiation source, a ray wavelength λ was 1.5418 Å, a scanning 2θ angle was 20° to 80°, and a scanning rate was 4°/min. The La(110) calculation formula is as follows: ${L}_{a} = \frac{K ∗ λ}{{β}_{110} ∗ cos {θ}_{110}} .$

K was the shape factor, taken as 1.84; λ was the wavelength (nm); β110 was the full width at half maximum of the 110 crystal plane at approximately 43° in the X-ray diffraction pattern; and θ110 was the diffraction angle corresponding to the 110 crystal plane in the X-ray diffraction pattern.

The Lc(002) calculation formula is as follows: ${L}_{c} = \frac{K ∗ λ}{{β}_{002} ∗ cos {θ}_{002}}$.

K was the shape factor, taken as 0.89; λ was the wavelength (nm); β002 was the full width at half maximum of the 002 crystal plane at approximately 26° in the X-ray diffraction pattern; and θ002 was the diffraction angle corresponding to the 002 crystal plane in the X-ray diffraction pattern. The test results are shown in Table 4.

### (2) Test for gram capacity of material

The prepared second negative electrode active material, conductive agent carbon black (Super P), and binder polyvinylidene fluoride (PVDF) were mixed at a mass ratio of 91.6:1.8:6.6 in solvent N-methylpyrrolidone (NMP) to produce a uniform slurry, the produced slurry was applied onto a surface of negative electrode current collector copper foil and dried in an oven for later use, ethylene carbonate (EC), ethyl methyl carbonate (EMC), and diethyl carbonate (DEC) were mixed at a volume ratio of 1:1:1 to obtain an organic solvent, LiPF₆ was dissolved in the organic solvent to prepare an electrolyte with a concentration of 1 mol/L, then a metal lithium plate was used as a counter electrode and a polyethylene (PE) film as a separator, and they were assembled with the electrolyte in an argon-protected glove box into a CR2430 button cell. The obtained button cell was left standing for 12 h.

At 25°C, the prepared button cell was first discharged to 0.005 V at a constant current of 0.15 mA, left standing for 5 minutes, then discharged to 0.005 V at a constant current of 50 µA, left standing for 5 minutes, and discharged to 0.005 V at a constant current of 10 µA, and the first-cycle discharge capacity of the button cell was recorded. Then, the button cell was charged to 2.0 V at a constant current of 0.3 mA, and the first-cycle charge capacity of the button cell was recorded. The ratio of the first-cycle charge capacity to the material mass is the gram capacity of the material. The test results are recorded in Table 4.

### (3) Test for proportion X1 of plateau lithiation capacity to the total

A CR2430 button cell was prepared using the same method as in the gram capacity test. After the CR2430 button cell was left standing for 12 h, at 25°C, the cell was first discharged to 0.005 V at a constant current of 0.15 mA, left standing for 5 minutes, then discharged to 0.005 V at a constant current of 50 µA, left standing for 5 minutes, discharged to 0.005 V at a constant current of 10 µA, and charged to 2.0 V at a constant current of 0.3 mA to obtain the relationship between the charge-discharge capacity of the material and the voltage, that is, the charge-discharge curve. The lithiation capacity of the lithiation plateau within the range of 0.005 V to 0.070 V in the discharge curve was denoted as C1, the total lithiation capacity within the range of 0.005 V to 2.0 V was denoted as C2, and the proportion X1 of the plateau lithiation capacity = C1/C2*100%.

The charge-discharge curve of Material 2-1 obtained by using the foregoing method is shown in FIG. 9. It can be seen from FIG. 9 that the lithiation capacity of the lithiation plateau within the range of 0.005 V to 0.070 V in the discharge curve is denoted as C1 and the total lithiation capacity within the range of 0.005 V to 2.0 V as C2, and then the proportion X1 of the plateau lithiation capacity is calculated to be 44.1%. The test results are recorded in Table 4.

### (4) Powder compacted density

1 g of sample powder was weighed, added to a mold with a bottom area of 1.327 cm², pressurized to 50000 N, with the pressure held for 30s and then released, and held for 10s. Then, the powder compacted density of the material under a pressure of 50000 N was recorded and calculated. The test results are recorded in Table 4.

**Table 4**

| No. | Second negative electrode active material | | | | | |
|---|---|---|---|---|---|---|
| | La(110) (nm) | Lc(002) (nm) | La/Lc | X1 (%) | Gram capacity (mAh/g) | Powder compacted density (g/cc) |
| Material 2-1 | 131.7 | 32.5 | 4.05 | 44.1 | 360.4 | 1.97 |
| Material 2-2 | 151.2 | 42 | 3.60 | 43.8 | 359.8 | 1.95 |
| Material 2-3 | 171 | 31.1 | 5.50 | 47.0 | 363.5 | 2.04 |

### Example 1

### Preparation of secondary battery

### (1) Preparation of negative electrode plate

The negative electrode active material (Material 1-1) used in the first region, conductive agent carbon black (Super P), thickener sodium carboxymethyl cellulose, and binder styrene-butadiene rubber were fully stirred and mixed at a weight ratio of 97.0:0.80:1.0:1.2 in an appropriate amount of solvent deionized water to produce a first negative electrode slurry.

The negative electrode active material (Material 2-1) used in the second region, conductive agent carbon black (Super P), thickener sodium carboxymethyl cellulose, and binder styrene-butadiene rubber were fully stirred and mixed at a weight ratio of 96.4:1.0:1.2:1.4 in an appropriate amount of solvent deionized water to produce a second negative electrode slurry.

The first negative electrode slurry and the second negative electrode slurry of the same mass were simultaneously extruded using an extrusion coating device, with the first negative electrode slurry being applied onto negative electrode current collector copper foil and the second negative electrode slurry being applied onto the first negative electrode slurry, followed by drying and cold pressing, to obtain the negative electrode plate. The first negative electrode slurry and the second negative electrode slurry had the same coating weight, the compacted density of the negative electrode film layer was 1.75 g/cc, the surface density of the negative electrode film layer was 11.5 mg/cm², and the thickness of the negative electrode film layer was 65 µm.

### (2) Preparation of positive electrode plate

Lithium iron phosphate, conductive carbon black, and polyvinylidene fluoride (PVDF) were mixed at a mass ratio of 96:2:2, solvent N-methylpyrrolidone was added, and the mixture was stirred to produce a uniform positive electrode slurry. The positive electrode slurry was applied onto two surfaces of positive electrode current collector aluminum foil, followed by drying and cold pressing, to obtain the positive electrode plate.

### (3) Separator

A 12 µm polyethylene film was used as the separator.

### (4) Preparation of electrolyte

Ethylene carbonate (EC), ethyl methyl carbonate (EMC), and diethyl carbonate (DEC) were mixed at a volume ratio of 1:1:1 to obtain an organic solvent, and then LiPF₆ was dissolved in the organic solvent to prepare an electrolyte with a concentration of 1 mol/L.

### (5) Assembly of secondary battery

The prepared positive electrode plate and negative electrode plate were sequentially placed and the separator was located between the positive electrode plate and the negative electrode plate for separation. Then, the resulting stack was wound to obtain an electrode assembly. The electrode assembly was placed into an outer package and dried, and the electrolyte was then injected, followed by processes such as vacuum sealing, standing, formation, and shaping, to obtain a secondary battery.

### Test for negative electrode plate

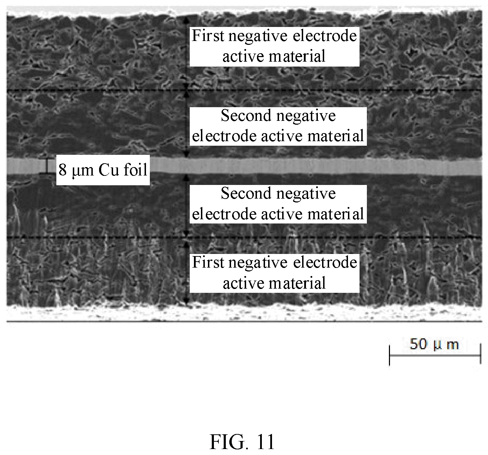

After the cold-pressed negative electrode plate was sampled and cross-section polishing treatment was performed on the electrode plate using a cross section ion polisher (for example, IB-09010 CP argon ion cross section polisher from JEOL of Japan), the longitudinal section of the negative electrode plate was scanned using a scanning electron microscope (for example, Sigma 300 scanning electron microscope from ZEISS of Germany) to obtain the SEM image as shown in FIG. 11.

It can be seen from FIG. 11 that the first region of the negative electrode plate prepared in Example 1 has a greater porosity than the second region.

### Tests for secondary battery performance

### (1) Fast charging capability (fast charging) test

① At 25°C, the secondary battery was charged to 3.8 V at a constant current of 0.33C, then charged to a current of 0.05C at a constant voltage, left standing for 5 min, and discharged to 2.0 V at a constant current of 0.33C, and its actual capacity was denoted as C₀.
② Then, the secondary battery was charged to 3.8 V or a negative electrode cut-off potential of 0 V (whichever came first) at a constant current of 1.0C₀, 1.3C₀, 1.5C₀, 1.8C₀, 2.0C₀, 2.3C₀, 2.5C₀, and 3.0C₀ sequentially, and needed to be discharged to 2.0 V at 1C₀ after each charging was completed. Negative electrode potentials for charging to 10% SOC, 20% SOC, 30% SOC, 40% SOC, 50% SOC, 60% SOC, 70% SOC, and 80% SOC (State of Charge, state of charge) at different charging rates were recorded.
③ Charging rate-negative electrode potential curves under different SOCs were drawn, and linear fitting was performed to obtain charging rates corresponding to a negative electrode potential of 0 V under different SOCs. These charging rates were charging windows for these SOCs, denoted as C_{10%SOC}, C_{20%SOC}, C_{30%SOC}, C_{40%SOC}, C_{50%SOC}, C_{60%SOC}, C_{70%SOC}, and C_{80%SOC} respectively.
④ A charging time T for the secondary battery charged from 10% SOC to 80% SOC (under the premise of no lithium precipitation of the secondary battery) was calculated according to the following formula, in min:
   (60/*C*_{20%*SOC*} + 60/*C*_{30%*SOC*} + 60/*C*_{40%*SOC*} + 60/*C*_{50%*SOC*} + 60/*C*_{60%*SOC*} + 60/*C*_{70%*SOC*} + 60/*C*_{80%*SOC*}) × 10%.

### (2) Energy density test

At 25°C, the secondary battery was charged to 3.65 V at a constant current of 1/3C, then charged to a current of 0.05C at a constant voltage of 3.65 V, left standing for 5 min, and discharged to 2.5 V at a constant current of 1/3C, and the battery discharge energy at this time was recorded. The battery discharge energy divided by the weight of the battery is the weight energy density of the battery, in Wh/kg. For details about the measurement data, see Table 5.

### (3) Cycling performance test

① At 45°C, the prepared secondary battery was left standing for 5 min, and then charged to an upper limit of a cut-off voltage (corresponding to 100% SOC) at a constant current of 1C.
② The secondary battery was charged to a current of 0.05C at a constant voltage, left standing for 5 min, and then discharged to a lower limit of the cut-off voltage (corresponding to 0% SOC) at a constant current of 1C, and the discharge capacity at this time was recorded, that is, the first-cycle discharge capacity (D₁).

The foregoing steps ① and ② were repeated for 1000 times, and the discharge capacity D₁₀₀₀ after 1000 cycles was recorded.

Capacity retention rate (%) of the secondary battery after 1000 cycles = D₁/D₁₀₀₀. The test data is recorded in Table 5.

### Examples 2 to 8

The preparation method of the secondary battery was the same as that in Example 1, except that the types of the active materials used in the second region and the first region were adjusted according to the records in Table 5.

The test results of the secondary batteries in Examples 2 to 8 are recorded in Table 5.

### Comparative Examples 1 to 3

The preparation method of the secondary battery was the same as that in Example 1, except that the types of the active materials used in the second region and the first region were adjusted according to the records in Table 5.

### Comparative Example 4

The preparation method of the secondary battery was the same as that in Example 1, except that the negative electrode plate was prepared by using the following method.

Negative electrode active material (Material 1-1), conductive agent carbon black (Super P), thickener sodium carboxymethyl cellulose, and binder styrene-butadiene rubber were fully stirred and mixed at a weight ratio of 97.0:0.80:1.0:1.2 in an appropriate amount of solvent deionized water to produce a negative electrode slurry.

The negative electrode slurry was applied onto negative electrode current collector copper foil using an extrusion coating device, followed by drying and cold pressing, to obtain the negative electrode plate. The compacted density of the negative electrode film layer was 1.75 g/cc, the surface density of the negative electrode film layer was 11.5 mg/cm², and the thickness of the negative electrode film layer was 65 µm.

### Comparative Example 5

The preparation method of the secondary battery was the same as that in Example 1, except that the negative electrode plate was prepared by using the following method.

Negative electrode active material (Material 1-1 and Material 2-2 at a mass ratio of 1:1), conductive agent carbon black (Super P), thickener sodium carboxymethyl cellulose, and binder styrene-butadiene rubber were fully stirred and mixed at a weight ratio of 97.0:0.80:1.0:1.2 in an appropriate amount of solvent deionized water to produce a negative electrode slurry.

The negative electrode slurry was applied onto negative electrode current collector copper foil using an extrusion coating device, followed by drying and cold pressing, to obtain the negative electrode plate. The compacted density of the negative electrode film layer was 1.75 g/cc, the surface density of the negative electrode film layer was 11.5 mg/cm², and the thickness of the negative electrode film layer was 65 µm.

The test results of the secondary batteries in Comparative Examples 1 to 5 are recorded in Table 5.

**Table 5**

| Item No. | Active material in first region | Active material in second region | Charging capability T (min) | Energy density (Wh/kg) | Capacity retention rate (%) |
|---|---|---|---|---|---|
| Example 1 | Material 1-1 | Material 2-2 | 25.2 | 165.1 | 88.2 |
| Example 2 | Material 1-2 | Material 2-2 | 22.8 | 164.7 | 88.0 |
| Example 3 | Material 1-2 | Material 2-1 | 23.1 | 170.3 | 88.1 |
| Example 4 | Material 1-2 | Material 2-3 | 22.3 | 173.2 | 87.9 |
| Example 5 | Material 1-3 | Material 2-1 | 24.6 | 171.2 | 87.6 |
| Example 6 | Material 1-4 | Material 2-1 | 22.0 | 170.0 | 87.8 |
| Example 7 | Material 1-3 | Material 2-2 | 24.8 | 164.3 | 87.2 |
| Example 8 | Material 1-4 | Material 2-3 | 22.3 | 172.5 | 88.0 |
| Comparative Example 1 | Material 1-5 | Material 2-1 | 21.8 | 160.2 | 86.5 |
| Comparative Example 2 | Material 1-6 | Material 2-1 | 27.9 | 168.3 | 88.6 |
| Comparative Example 3 | Material 2-2 | Material 1-1 | 30.3 | 164.8 | 89.7 |
| Comparative Example 4 | Material 1-1 | | 21.7 | 153.2 | 86.3 |
| Comparative Example 5 | Material 1-1 and Material 2-2 | | 28.3 | 161.8 | 88.2 |

It can be seen from the data in Table 5 that compared to Comparative Examples 1 to 5, Examples 1 to 8 conforming to this disclosure can effectively improve the kinetic performance and maintain high energy density without affecting the cycling performance.

### Examples 9 and 10

The preparation and test methods of the secondary battery were the same as those in Example 1, except that during the preparation of the negative electrode plate, the mass ratio of the first negative electrode active material to the second negative electrode active material was adjusted according to the records in Table 6.

The secondary battery was tested. The test results are recorded in Table 6.

**Table 6**

| Item No. | Mass ratio of first negative electrode active material to second negative electrode active material | Charging capability T (min) | Energy density (Wh/kg) | Capacity retention rate (%) |
|---|---|---|---|---|
| Example 1 | 5:5 | 22.3 | 173.2 | 88.40 |
| Example 9 | 6:4 | 20.1 | 167.3 | 87.60 |
| Example 10 | 4:6 | 24.8 | 178.5 | 88.90 |

It can be seen from the data in Table 6 that with the mass ratio of the first negative electrode active material to the second negative electrode active material being 4:6 to 6:4, the prepared secondary battery has improved kinetic performance and maintains the energy density.

It should be noted that this disclosure is not limited to the foregoing embodiments. The foregoing embodiments are merely examples, and embodiments having substantially the same constructions and having the same effects as the technical idea within the scope of the technical solutions of this disclosure are all included in the technical scope of this disclosure. In addition, without departing from the essence of this disclosure, various modifications made to the embodiments that can be conceived by persons skilled in the art, and other manners constructed by combining some of the constituent elements in the embodiments are also included in the scope of this disclosure.

## Claims

1. A secondary battery, comprising a negative electrode plate, wherein the negative electrode plate comprises a negative electrode current collector and a negative electrode film layer located on at least one surface of the negative electrode current collector, and the negative electrode film layer has a first surface facing away from the negative electrode current collector and a second surface disposed opposite the first surface, wherein thickness of the negative electrode film layer is denoted as H, a region from the first surface of the negative electrode film layer to a thickness of 0.3H is denoted as a first region of the negative electrode film layer, and a region from the second surface of the negative electrode film layer to a thickness of 0.3H is denoted as a second region of the negative electrode film layer, the first region comprising a first negative electrode active material, and the second region comprising a second negative electrode active material, wherein
the first negative electrode active material comprises a matrix and a carbon coating layer formed on at least part of a surface of the matrix; and a lithiation plateau voltage of the first negative electrode active material is 0.118 V to 0.140 V, wherein a charge-discharge test is performed on a button cell prepared from a test material at a delithiation rate of 0.1C and a lithiation rate of 0.05C separately to obtain a charge-discharge curve within a range of 0.005 V to 2.0 V, and a ratio of a total lithiation energy to a total lithiation capacity within the range of 0.005 V to 2.0 V is defined as a lithiation plateau voltage of the test material; and
gram capacity of the second negative electrode active material is greater than that of the first negative electrode active material.

2. The secondary battery according to claim 1, wherein the lithiation plateau voltage of the first negative electrode active material is 0.123 V to 0.135 V.

3. The secondary battery according to claim 1 or 2, wherein the carbon coating layer comprises soft carbon.

4. The secondary battery according to any one of claims 1 to 3, wherein the first negative electrode active material comprises a primary particle graphite material and a secondary particle graphite material.

5. The secondary battery according to claim 4, wherein in the first negative electrode active material, a number percentage of the secondary particle graphite material is greater than or equal to 60%.

6. The secondary battery according to any one of claims 1 to 5, wherein a powder OI value of the first negative electrode active material is 2.0 to 6.0.

7. The secondary battery according to any one of claims 1 to 6, wherein the gram capacity of the second negative electrode active material is 359 mAh/g or more.

8. The secondary battery according to any one of claims 1 to 7, wherein the gram capacity of the second negative electrode active material is 360 mAh/g to 366 mAh/g.

9. The secondary battery according to any one of claims 1 to 8, wherein
powder compacted density of the first negative electrode active material under a pressure of 50000 N is 1.74 g/cc to 1.79 g/cc; and/or
powder compacted density of the second negative electrode active material under a pressure of 50000 N is 1.95 g/cc to 2.04 g/cc.

10. The secondary battery according to any one of claims 1 to 9, wherein the first negative electrode active material satisfies one or more of the following:
(1) particle size by volume D_{V}50 of the first negative electrode active material is 7.8 µm to 15.8 µm;
(2) particle size distribution (D_{V}90-D_{V}10)/D_{V}50 of the first negative electrode active material is 0.90 to 1.50;
(3) BET specific surface area of the first negative electrode active material is 0.6 m²/g to 1.3 m²/g; and
(4) the gram capacity of the first negative electrode active material is 350.5 mAh/g to 358.5 mAh/g.

11. The secondary battery according to any one of claims 1 to 10, wherein the second negative electrode active material satisfies one or more of the following:
(1) La(110) of the second negative electrode active material is 130 nm to 175 nm, and Lc(002) is 30 nm to 42 nm, wherein La(110) represents a crystallite size along an a-axis in a (110) crystal plane of the material, and Lc(002) represents a crystallite size along a c-axis in a (002) crystal plane of the material;
(2) La(110)/Lc(002) is 3.5 to 5.5;
(3) a charge-discharge test is performed on a button cell prepared from the second negative electrode active material at a delithiation rate of 0.1C and a lithiation rate of 0.05C separately to obtain a charge-discharge curve within a range of 0.005 V to 2.0 V, wherein in the discharge curve of the second negative electrode active material, a lithiation plateau exists in a voltage range of 0.005 V to 0.070 V, and a proportion X1 of a discharge capacity corresponding to the lithiation plateau to a total discharge capacity of the button cell is 43% or more; and
(4) graphitization degree of the second negative electrode active material is 94.0% to 96.0%.

12. The secondary battery according to claim 11, wherein the second negative electrode active material satisfies one or more of the following:
(1) La(110) of the second negative electrode active material is 132 nm to 172 nm, and Lc(002) is 30 nm to 36 nm;
(2) La(110)/Lc(002) is 4.5 to 5.5;
(3) the proportion X1 of the discharge capacity corresponding to the lithiation plateau to the total discharge capacity of the button cell is 43% to 47%; and
(4) the graphitization degree of the second negative electrode active material is 94.2% to 95.8%.

13. The secondary battery according to any one of claims 1 to 12, wherein the second negative electrode active material satisfies one or more of the following:
(1) particle size by volume D_{V}50 of the second negative electrode active material is 14.5 µm to 18.0 µm;
(2) particle size distribution (D_{V}90-D_{V}10)/D_{V}50 of the second negative electrode active material is 0.9 to 1.25; and
(3) BET specific surface area of the second negative electrode active material is 0.8 m²/g to 2.1 m²/g.

14. The secondary battery according to any one of claims 1 to 13, wherein in the negative electrode film layer, a mass ratio of the first negative electrode active material to the second negative electrode active material is 4:6 to 6:4.

15. The secondary battery according to any one of claims 1 to 14, wherein the secondary battery satisfies one or more of the following conditions:
compacted density of the negative electrode film layer is 1.50 g/cc to 1.90 g/cc;
surface density of the negative electrode film layer is 6.0 mg/cm² to 24.0 mg/cm²; and
the thickness of the negative electrode film layer is 60 µm to 240 µm.

16. The secondary battery according to any one of claims 1 to 15, wherein porosity of the first region is greater than that of the second region.

17. The secondary battery according to any one of claims 1 to 16, wherein a preparation method of the first negative electrode active material comprises:
providing a matrix material; and
mixing the matrix material and an organic carbon source, followed by heat treatment, to obtain the first negative electrode active material;
wherein a mass ratio of the matrix material to the organic carbon source is 100:1.5 to 100:8.

18. An electric apparatus, comprising the secondary battery according to any one of claims 1 to 17.
